(19) Europäisches Patentamt
European Patent Office
Office européen des brevets

(11) Publication number : **0 409 781 B1**

(12) # EUROPEAN PATENT SPECIFICATION

(45) Date of publication of patent specification : **01.06.94 Bulletin 94/22**

(51) Int. Cl.$^5$ : **C08L 3/02,** C08L 3/04, C08L 1/28

(21) Application number : **90810533.1**

(22) Date of filing : **12.07.90**

(54) **Polymer base blend compositions containing destructurized starch.**

(30) Priority : **18.07.89 US 407643**
**08.12.89 US 449313**

(43) Date of publication of application : **23.01.91 Bulletin 91/04**

(45) Publication of the grant of the patent : **01.06.94 Bulletin 94/22**

(84) Designated Contracting States : **AT BE CH DE DK ES FR GB GR IT LI LU NL SE**

(56) References cited :
**CH-A- 422 323**
**DE-A- 739 630**

(73) Proprietor : **WARNER-LAMBERT COMPANY**
**201 Tabor Road**
**Morris Plains New Jersey 07950 (US)**

(72) Inventor : **Sachetto, Jean-Pierre**
**Duechelweiher 20**
**CH-4144 Arlesheim (CH)**
Inventor : **Silbiger, Jakob**
**Oberwilerstrasse 72**
**CH-4054 Basel (CH)**
Inventor : **Lentz, David John**
**23 Timber Lane**
**Randolph, N.J. 07869 (US)**

(74) Representative : **Silbiger, Jakob**
**c/o André Braun**
**European Patent Attorney**
**Murtengasse 5**
**CH-4051 Basel (CH)**

EP 0 409 781 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to polymer compositions capable of being formed by heat and pressure into articles having dimensional stability and enhanced physical properties, and to pre-mixes useful for preparing these compositions. These compositions and pre-mixes comprise destructurized starch and other polymers as described herein.

It is known that natural starch which is found in vegetable products and which contains a defined amount of water can be treated at an elevated temperature and in a closed volume, thereby at elevated pressures, to form a melt. The process is conveniently carried out in an injection molding machine or extruder. The starch is fed through the hopper onto a rotating, reciprocating screw. The feed material moves along the screw towards the tip. During this process, its temperature is increased by means of external heaters around the outside of the barrel and by the shearing action of the screw. Starting in the feed zone and continuing in the compression zone, the particulate feed becomes gradually molten. It is then conveyed through the metering zone, where homogenization of the melt occurs. The molten material at the tip can then be treated further by injection molding or extrusion or any other known technique to treat thermoplastic melts, to obtain shaped articles.

This treatment, which is described in the European Patent Application No. 84 300 940.8 (Publication No. 118 240) which patent is incorporated herein by reference, yields a substantially destructurized starch. As described in the above mentioned patent, the reason for this is that the starch is heated above the glass transition and the melting temperatures of its components. As a consequence, a melting and disordering of the molecular structure of the starch granules takes place, so that a substantially destructurized starch is obtained. The expression "destructurized starch" defines starch obtained by such thermoplastic melt formation. Reference is also made to European Patent Applications No. 88810455.1 (Publication No. 298,920), No. 88810548.3 (Publication No. 304,401) and No. 89810046.6 (Publication No. 326,517) which further describe destructurized starch, methods for making it, and uses of it. These application are also incorporated herein by reference.

It is preferred that the destructurized starch used in the present invention has been heated to a high enough temperature and for a time long enough so that the specific endothermic transition analysis as represented by a differential scanning calorimetry (DSC) curve indicates that a specific relatively narrow peak just prior to oxidative and thermal degradation has disappeared, as described in the above-mentioned European Patent Application Serial No. Application No. 89810046.6 (Publication No. 326 517).

Destructurized starch is a new and useful material for many applications. An important property is its biodegradability. In humid air, however, destructurized starch takes up water from the air, thereby increasing its moisture content. As a consequence, a shaped article made from destructurized starch may under such conditions lose its dimensional stability. On the other hand such an article may dry out in low humidity and become brittle.

Thermoplastic starch has a unique set of properties and while these are very useful, they may limit its utility in cases where a softer, more resilient or harder, tougher polymer is desired.

Thermoplastic starch as mentioned can be extruded and molded into numerous useful shapes and profiles. However, the processing parameters such as water content, temperature, and pressure are critical and must be narrowly controlled to achieve reproducible quality products. This is a further disadvantage for many applications.

To overcome these potential limitations, it would be useful to increase the dimensional stability over a wide humidity range; to increase the toughness (measured as break energy); to increase the elasticity (measured as elongation); to decrease polymer stiffness (measured as Young's modulus) and increase the hardness.

Broadening processing latitude increases the variety of shapes and composites and decreases the need for close controls. It would therefore also be useful to improve the control of the melt strength, e.g. increasing the processing latitude for extruding, injection molding, film blowing or fiber drawing and to control the surface tack and adhesion to other substrates.

Conventional thermoplastic materials are hydrophobic, substantially water-insoluble polymers which are conventionally processed in the absence of water and volatile materials. Starch to the contrary forms a melt in the presence of water but decomposes at elevated temperature, i.e. around 240°C. It was therefore expected that such a starch melt could not be used as a thermoplastic component together with hydrophobic, substantially water-insoluble polymeric materials not only because starch forms a melt in the presence of water as described above, but also because of its chemical structure and hydrophilic nature.

EP-A-0 118 240 as mentioned herein above discloses destructurized starch and its preparation. DE-A-0 739 630 refers to pastes containing starch cellulose ethers and starch. These pastes are dried and ground to a powdery form. CH-A-0 422 323 refers to shaped articles made from a polyolefine and a optionally substituted cellulose ether which is dispersed therein. EP-A-0 304 401 refers to the use of pre-extruded starch in the form of a granulate for producing shaped articles based on destructurized starch. Some water-soluble chemically

modified polysaccharides may be used as optional additives. EP-A-0 327 505 filed prior to the filing date of the present patent application but published on August 9, 1989 only refers to compositions comprising a water-containing destructurized starch and at least one essentially water-insoluble synthetic thermoplastic polymer. None of the cited documents does disclose compositions comprising three components a), b) and c), which necessarily must be present in the composition and as defined in the present patent application.

It has now been found that starch, when heated in a closed volume at proper moisture and temperature conditions as described above to form a melt of destructurized starch, is substantially compatible in its processing with melts formed by hydrophobic substantially water insoluble thermoplastic polymers and that the two types of molten materials show an interesting combination of properties, especially after the melt has solidified.

One very important aspect is the surprisingly improved dimensional stability of such destructurized starch blended with such hydrophobic thermoplastic materials. Such polymer compositions are described in copending European Patent Application No. 89810078.9 (Publication No. 327,505), which is incorporated herein by reference. Although articles made from such compositions possess better dimensional stability than those made from destructurized starch alone, the physical properties of the therein-described compositions are not as good as might be desired for some end uses. In particular, it is important that articles made from destructurized starch compositions retain sufficient strength and dimensional stability to perform their desired function while still being biodegradable after disposal.

It has now been found that articles made from such destructurized starch blended with specific hydrophobic thermoplastic materials as described herein show a surprising increase in all or a part of their physical properties and behaviour of their melts as to overcome the limitations as explained above. Moreover it was surprisingly found that many of the blends described herein show a significantly improved dimensional stability in humid air compared with non-blended destructurized starch whilst retaining a surprisingly high degree of disintegration in contact with liquid water which in consequence leads to a high degree of biodegradability.

In order to achieve such properties, it has been found useful to make polymer compositions comprising: a) destructurized starch, b) at least one polymer selected from the group of polysaccharides which have been chemically modified to contain added hydroxyalkyl groups and/or contain alkyl ether groups, and/or contain ester groups (referred to herein as "component b)"), and optionally c) a substantially water-insoluble polymer different from those defined as component b). In one aspect, the present invention relates to a composition comprising destructurized starch and component b). This composition is useful itself for making finished articles, but it is primarily useful as a "pre-mix" for combining with the substantially water-insoluble polymer. In a second aspect, the invention comprises the ternary composition of destructurized starch, component b), and at least one substantially water-insoluble polymer (component c)). These compositions may be in the form of powdery mixtures of the components, melts, or solid forms. The invention also includes methods for making and using both above described compositions and shaped articles made therefrom.

Specifically the present invention refers to a composition consisting of

a) destructurized starch produced by heating a starch having a water content of 5 to 40% by weight based on the starch/water component, in a closed volume under shear; and at a temperature of 130°C to 220°C above the glass transition and the melting points of its components and at a pressure of up to 150 x $10^5$ N/$m^2$ to form a melt whereby the pressure corresponds at a minimum to the vapour pressure of water at the temperature used and heating the melt for a time long enough to obtain a melting of the molecular structure of the starch granules and a homogenization of the melt;

b) at least one alkoxylated cellulose, one alkoxylated starch or one alkoxylated hemi-cellulose, which contains hydroxyalkyl groups and which is optionally further substituted by alkyl ether groups and/or alkyl ester groups wherein the degree of substitution, (average number of hydroxyl groups per anhydroglucose unit that is substituted) is up to 3.0;

c) a thermoplastic polymer which undergoes melt formation at a set processing temperature within the range of 95°C to 190°C and is selected from (i) the group consisting of polyolefines, polystyrenes, polyacrylonitriles, polyacrylates, polymethacrylates, polyacetals, polyamides, thermoplastic polyesters, thermoplastic polyurethanes, polycarbonates, polyarylethers, thermoplastic polyimides, (ii) alkylene/vinyl ester-copolymers, alkylene/acrylate or methacrylate copolymers, ABS-copolymers, styrene/acrylonitrile-copolymers, alkylene/maleic anhydride-copolymers, acrylic acid esters/ acrylonitrile copolymers, acrylamide/acrylonitrile copolymers, and mixtures thereof.

d) optionally one or more materials selected from the group consisting of fillers, lubricants, mold release agents, plasticizers, foaming agents, stabilizers, flow accelerators, coloring agents, pigments and mixtures thereof;

wherein the component b) is present in an amount of less than or equal to 50% and in an amount of at least 1% by weight of the total composition; and wherein the sum of the components b) and c) constitutes 15% up

to 80% by weight of the total composition.

The present invention includes said polymer compositions in the form of powdery mixtures of their components, in the form of melts, or in solidified form.

Component b) is chosen as described herein to be substantially compatible with the starch and also to promote the compatibility of component c) with the combination of starch and component b).

The present invention further refers to a method of producing said polymer compositions in the molten or solid form as well as a method of producing shaped articles from said polymer compositions, and to the resulting shaped articles made therefrom.

The polymer compositions of the present invention are prepared by admixing destructurized starch, component b) and optionally component c), and any further additives. This mixture is then heated in a closed volume to elevated temperatures until a homogeneous melt is obtained, and shaped articles can be formed therefrom.

An alternate method of producing the polymer compositions of the present invention comprises: Heating starch which is in a condition to be destructurized in a closed volume to elevated temperatures and at elevated pressures for a time sufficient to destructurize the starch and form a melt; adding component b) as well as other polymers and/or additives before, during or after such starch destructurization; and continuing to heat the mixture until a homogenous melt is obtained. It is preferred that component b) and, if desired, component c), as well as other additives be combined with the starch and the combination formed into a melt. The starch in this combination may be already wholly or partially destructurized or the destructurization may take place during melt formation.

The present invention further refers to the process of working said polymer composition under controlled water content, temperature and pressure conditions as a thermoplastic melt wherein said working process is any known process, such as, for example injection molding, blow molding, extrusion, coextrusion, compression molding, vacuum forming, thermoforming or foaming. All of these processes are collectively referred to herein as "forming".

The term "starch" as used herein includes chemically substantially non-modified starches as for example carbohydrates of natural, vegetable origin, composed mainly of amylose and/or amylopectin. They can be extracted from various plants, examples being potatoes, rice, tapioca, corn (maize), pea, and cereals such as rye, oats and wheat. Preferred is starch made from potatoes, corn, wheat or rice. Mixtures of starch obtained from these sources are contemplated. It further includes physically modified starches such as gelatinized or cooked starches. It further includes pre-extruded starches, as described in the above-referenced European Patent Application No. 89810046.6 (Publication No. 326,517).

As described above, it has been found that starches, e.g. with a water content within the range of about 5 to about 40 % by weight based on the weight of the composition, undergo a specific narrow endothermic transition on heating to elevated temperatures and in a closed volume just prior to the endotherm change characteristic of oxidative and thermal degradation. The specific endothermic transition can be determined by differential scanning calorimetric analysis (DSC) and is indicated on the DSC-diagram by a specific relatively narrow peak just prior to the endotherm characteristic of oxidative and thermal degradation. The peak disappears as soon as the mentioned specific endothermic transition has been undergone. The term "starch" includes also treated starches wherein said specific endothermic transition has been undergone. Such starch is described in the EP 89810046.6 (Publication No. 326,517).

Although at the current time, destructurization of starch requires the presence of water in ranges disclosed herein, the present inventive compositions also contemplate the use of destructurized starch prepared by other methods, e.g. without the use of water.

The water content of such a starch/water composition is preferably about 5 to about 40 % water by weight of the starch/water component and preferably about 5 to about 30 %. However, in order to work with the material near its equilibrium water content to which it gets when it is finally exposed to the free atmosphere, a water content of about 10 to about 22 %, preferably of about 14 to about 18 % by weight calculated based on the starch/water component should be used in processing and is preferred.

Polysaccharides are known and described e.g. in Encyclopedia of Polymer Science and Engineering (2nd edition) 1987.

Polysaccharides are naturally occurring carbohydrate polymers in which monosaccharide units are linked directly through glycosidic linkages. Such polymers are found in the plant, animal and microbial kingdoms.

Preferred polysaccharides used in this invention are the different celluloses, the different starches and the known hemi-celluloses, especially celluloses and starches, respectively their derivatives. Most preferred are the starch derivatives.

The polymer of the component b) is preferbly an alkoxylated polysaccharide, which contains hydroxy alkyl groups and which further may contain other functional groups, e.g. alkyl ether groups, and/or alkyl ester

groups. Said hydroxy alkyl groups are preferably hydroxy ethyl and/or hydroxy propyl group.

In the following, the degree of substitution (DS) is defined as the average number of hydroxyl groups in the anhydroglucose unit that are substituted in a particular product. In the case of starch or cellulose for instance the DS value may range from 0 to 3.0. This value however, is preferably within the range of about 0.05 to about 2.5 and preferably within the range of about 0.1 to about 1.5.

The molar substitution (MS) is defined as the total number of moles of a reagent such as ethylene or propylene oxide which becomes attached to the polysaccharide.

The average length of the pendant chain (n) is given by the ratio MS/DS. Examples of component b) are the following compounds:

1. hydroxyethyl cellulose
   (DS: 0.2 - 1.5; MS: 0.3 - 2.5)
2. hydroxypropyl cellulose
   (DS: 0.2 - 1.5; MS: 0.3 - 4.0)
3. hydroxyethyl hydroxypropyl cellulose
   (DS: 0.2 - 1.5 for hydroxyethyl and hydroxypropyl with MS of 0.3 - 2.5 for hydroxyethyl and MS of 0.3 - 4.0 for hydroxypropyl)
4. hydroxypropyl methyl cellulose
   (DS: 0.2 - 1.5 for hydroxyethyl and MS: 0.3 - 4.0; DS 0.1 - 2.5 for methyl)
5. hydroxyethyl methyl cellulose
   (DS: 0.2 - 1.5 for hydroxyethyl and MS: 0.3 - 2.5; DS 0.1 - 2.5 for methyl)
6. hydroxybutyl methyl cellulose
   (DS: 0.1 - 1.0 for hydroxybutyl and MS: 0.3 - 1.0; DS 0.1 - 2.5 for methyl)
7. ethylhydroxyethyl cellulose
   (DS: 0.1 - 2.5 for ethyl and DS: 0.2 - 1.5 for hydroxyethyl with MS: 0.3 - 2.5)
8. dihydroxypropyl cellulose
   (DS: 0.2 - 1.5 for hydroxyethyl and MS: 0.3 - 2.5; DS 0.1 - 2.5 for methyl)
9. methyl cellulose
   (DS: 0.1 - 2.5)
10. ethyl cellulose
   (DS: 0.1 - 2.5)
11. methylethyl cellulose
   (DS: 0.1 - 2.5 for methyl and ethyl)
12. benzyl cellulose
   (DS: 0.1 - 2.0)
13. hydroxypropyl starch acetate
   (MS of 3 - 6 hydroxypropyl groups and a DS of 1.0 - 2.5 acetate groups)
14. hydroxypropyl starch laurate
   (MS: 0.66; DS: 1.2 - 3.0)
15. hydroxyethyl starch acetate (MS of 0.66 and a DS of 1.2 - 3)
16. hydroxyethyl starch laurate
   (MS: 0.66; DS: 1.2 - 3.0)
17. hydroxyethyl starch
   (DS: 0.05 - 1.5; MS: 5 - 10)
18. hydroxypropyl starch
   (DS: 0.05 - 1.5; MS: 5 - 10)
19. hydroxyethyl alginate
   (DS: 0.1 - 1.0; MS: 2 - 3)
20. hydroxyethyl guar gum
   (DS: 0.1 - 1.0; MS: 2 - 3)
21. hydroxypropyl guar gum
   (DS: 0.1 - 1.0; MS: 2 - 3)
22. hydroxyethyl locust bean gum
   (DS: 0.1 - 1.0; MS: 2 - 3)
23. hydroxypropyl locust bean gum
   (DS: 0.1 - 1.0; MS: 2 - 3)
24. methyl tamarind gum
   (DS: 0.1 - 1.5)
25. ethyl tamarind gum

(DS: 0.05 - 1.5)
26. hydroxyethyl tamarind gum
(DS: 0.1 - 1.0; MS: 1 - 4)
27. hydroxypropyl tamarind gum
(DS: 0.1 - 1.0; MS: 1 - 3)
28. methyl xanthan gum
(DS: 0.1 - 1.5)
29. ethyl xanthan gum
(DS: 0.1 - 1.0; MS: 1 - 3)
30. hydroxyethyl xanthan gum
(DS: 0.1 - 1.0; MS: 1 - 3)
31. hydroxypropyl xanthan gum
(DS: 0.1 - 1.2; MS: 1 - 3)
32. methyl pullulan
(DS: 0.1 - 2.0)
33. ethyl pullulan
(DS: 0.1 - 2.5)
34. hydroxyethyl pullulan
(DS: 0.1 - 1.0; MS: 1 - 3)
35. hydroxypropyl pullulan
(DS: 0.1 - 1.2; MS: 1 - 4)
36. methyl xylan
(DS: 0.1 - 2.5)
37. ethyl xylan
(DS: 0.1 - 2.5)
38. hydroxyethyl xylan
(DS: 0.1 - 1.5; MS: 0.5 - 2)
39. hydroxypropyl xylan
(DS: 0.1 - 1.5; MS: 0.5 - 3)

The preferred components b) are compounds No. 1, 2, 3, 4, 5, 6, 7, 13, 15, 17, 18, 19, 20, 21, 22, 23, 34, 36, 39 taken from the above list.

The most preferred components b) are compounds No. 1, 2, 3, 4, 5, 6, 7, 13, 15, 17, 18, and 19 taken from the above list.

Method for the alkylation and alkoxylation of polysaccharides

The alkylated and alkoxylated ethers of polysaccharides are produced by known methods such as nucleophilic substitution under alkaline conditions of the hydroxyl groups of the polysaccharides with one or more of the following alkylating agents: alkyl halides, aryl-alkyl halides, epoxides.

With an epoxide e.g. ethylene oxide, propylene oxide, one obtains an hydroxyethyl or hydroxypropyl ether respectively.

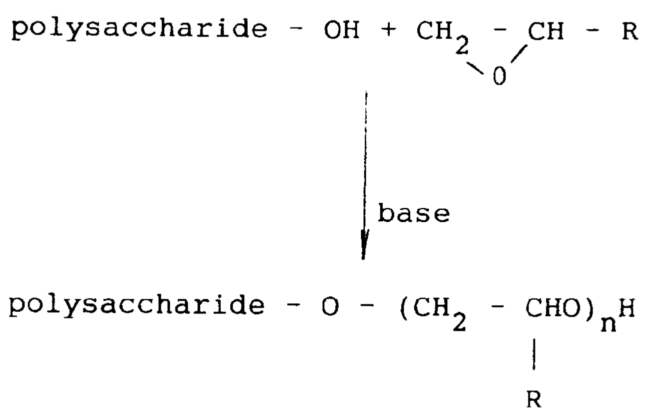


(R = H, $CH_3$)

With the alkyl halide, primarily the chloride such as methyl chloride, ethyl chloride etc., one obtains the methyl or ethyl ether.

With the aryl-alkyl halide, such as benzyl chloride, one obtains a benzyl ether.

The alkyl halide, aryl-alkyl halide and epoxide can be combined together to give a mixed ether derivative. For instance methyl chloride and propylene oxide may be added in mixture to the alkaline polysaccharide to lead to a methylhydroxypropyl ether.

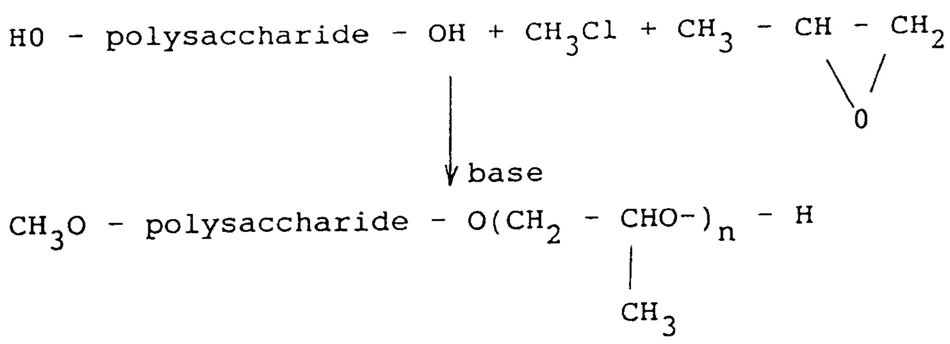


These methods and compounds are known per se.

When using the expoxide as reagent, several molecules of the epoxide may also react with each other so that a polyalkoxy chain results. The number n of units present in the chain can be determined from the degree of substitution (DS) and the molar substitution (MS). The average length of the pendant chain (n) is given by the ratio MS/DS.

As mentioned above, the polymer composition comprising the components a) and b) optionally contains one or more substantially water-insoluble hydrophobic polymers (component c), as well as further additives.

The component c) is a substantially water-insoluble polymer or a mixture of such substantially water-insoluble polymers.

As used herein a "substantially water-insoluble thermoplastic polymer" is a polymer which preferably absorbs water at a rate of less than 10 % and preferably less than 5 % per 100 grams of the polymer at room temperature and preferably at a rate of less than 2 % per 100 grams of the polymer at room temperature.

Examples of substantially water-insoluble thermoplastic materials are polyolefines, such as polyethylene (PE), polyisobutylenes, polypropylenes; vinyl polymers such as polystyrenes; polyacrylonitriles (PAN); poly(vinyl carbazoles) (PVK); substantially water-insoluble polyacrylates or polymethacrylates; polyacetals; thermoplastic polycondensates such as polyamides (PA), polyesters, polyurethanes, polycarbonates, poly(alkylene terephthalates); polyarylethers and thermoplastic polyimides; as well as their copolymers.

Further included are substantially water-insoluble thermoplastic copolymers known such as alkylene/vinyl ester-copolymers preferably ethylene/vinyl acetate-copolymers (EVA); ethylene/vinyl alcohol-copolymers (EVAL); alkylene/acrylates or methacrylate copolymers preferably ethylene/acrylic acid-copolymers (EAA); ethylene/ethyl acrylate-copolymers (EEA); ethylene/methyl acrylate-copolymers (EMA); ABS-copolymers; styrene/acrylonitrile-copolymers (SAN);
alkylene/maleic anhydride copolymer preferably ethylene/ maleic anhydride copolymer; as well as their mixtures.

Preferred from these are those which undergo melt formation at a set processing temperature preferably within the range of about 95°C to about 260°C, preferably within the range of about 95°C to about 220°C and more preferably within the range of about 95°C to about 190°C.

Also preferred are those polymers containing polar groups such as ether, acid, ester, amide, or urethane groups. Such polymers include e.g. copolymers of ethylene, propylene or isobutylene with vinyl compounds or acrylates such as ethylene/vinyl acetate-copolymers (EVA), ethylene/vinyl alcohol-copolymers (EVAL), ethylene/acrylic acid-copolymers (EAA) ,ethylene/ ethyl acrylate-copolymers (EEA), ethylene/methacrylate-copolymers (EMA), styrene/acrylonitrile-copolymers (SAN); polyacetals; block copolymers of amide-ethers, amide-esters; block copolymers of urethane-ethers, urethane-esters; as well as their mixtures.

Most preferred are those polymers containing polar groups and most preferably those which contain active hydrogen atoms, ester groups and/or ether groups and/or urethane groups.

Such substantially water-insoluble thermoplastic polymers may be added in any desired amount as described herein.

Such polymers may be used in any known form. Their molecular weight is also generally known in the art. It is also possible to use such polymers of relatively low molecular weight (oligomers). The choice of a particular molecular weight range is a matter and routine experimentation known to those skilled in the art.

In the composition according to this invention, the two components a) and b) or the three components a), b) and c) always add up to 100 % and the values of the components given in percent hereinbelow refer to the sum of 100 %. The ratio of destructurized starch to component b) and optionally to the sum of components b) and c) can be 1:99 to 99:1. It is however preferred that the destructurized starch contributes noticeably to the properties of the final material. Therefore, it is preferred that the destructurized starch is present in an amount of at least 20 %, more preferably 50 % and most preferably in the range of 70 % to 99 % by weight of the entire composition. That is, component b) is and optionally the sum of the components b) and c) are present in amounts of about 80 % or less, more preferably less than or equal to 50 % and most preferably in the range of 30 % to 1 % by weight of the entire composition.

Component b) is a relatively polar material. When it functions in the present compositions in combination with component c), it is able to mix more readily with a more polar component c) than with a less polar one. Accordingly, with more polar components c), relatively less of component b) will be required than with less polar ones. The skilled worker will be able to select appropriate ratios of components b) and c) to obtain a substantially homogenous melt composition.

Compositions comprising 1 to 15 % by weight of components b) or the sum of components b) and c) and 99 to 85 % of destructurized starch show a significant improvement in the properties of the obtained materials. For certain applications the preferred ratio of component b) or the sum of the components b) and c) to the destructurized starch component is about 1 to about 10 % to about 99 % to about 90 % by weight of the total composition. If the destructurized starch contains water, the percentage of destructurized starch component present is meant to include the weight of water.

The starch may be mixed prior to destructurization with additives as named hereinbelow to yield a free flowing powder useful for continuous processing and is destructurized and granulated before it is mixed with components b) or b) and c) or the other optionally added components. The other components to be added are preferably granulated to a granular size equal to that of the granulated destructurized starch.

However, it is possible to process native starch or pre-extruded and/or destructurized granulated or powdered starch together with powdered or granulated additives and/or the polymeric material in any desired mixture or sequence.

Thus, it is preferred that the components a), b) and c) as well as other conventional additives be mixed in a standard mixer. This mixture can then be passed through an extruder to produce granulates or pellets as one form of shaped articles which are also useful as starting material for processing into other articles. However, it is possible to avoid granulating and to process the obtained melt directly using down-stream equipment to produce films, blown films included, sheets, profiles, pipes, tubes, foams or other shaped articles. The sheets can be used for thermoforming.

It is preferred that fillers, lubricants and/or plasticizers be added to the starch before destructurization. However, the addition of coloring agents as well as of the components b), c) and additives other than the aforementioned can be added before, during or after destructurization.

The substantially destructurized starch/water component or granules have a preferred water content in the range of about 10 to about 22 % by weight of the starch/water component, preferably about 12 to about 19 % and most preferably about 14 to about 18 % by weight of the starch/water component.

The water content described above refers to the percentage of water relative to the weight of the starch/water component within the total composition and not to the weight of the total composition itself, which would include also the weight of any added substantially water-insoluble thermoplastic polymer.

In order to destructurize the starch and/or to form a melt of the new polymeric composition according to this invention, it is suitably heated in a screw and barrel of an extruder for a time long enough to effectuate destructurization and melt formation. The temperature is preferably within the range of 130°C to 190°C depending on the type of starch used. For this destructurization and melt formation, the composition is heated in a closed volume. A closed volume can be a closed vessel or the volume created by the sealing action of the unmolten feed material as happens in the screw and barrel of injection molding or extrusion equipment. In this sense the screw and barrel of an injection molding machine or an extruder is to be understood as being a closed vessel. Pressures created in a closed vessel correspond to the vapour pressure of water at the used temperature but of course additional pressure may be applied and/or generated as normally occurs in a screw and barrel. The preferred applied and/or generated pressures are in the range of pressures which occur in extrusion and are known per se, e.g. from 5 to 150 x $10^5$ $N/m^2$ preferably from 5 to 75 x $10^5$ $N/m^2$ and most particularly from 5 to 50 x $10^5$ $N/m^2$. If the thus-obtained composition is comprised only of destructurized starch, it may be granulated and ready to be mixed with the further components according to a chosen mixing and processing procedure to obtain the granular mixture of the destructurized starch/polymer starting material to be fed to the screw barrel.

However, the obtained melt in the screw and barrel may be injection molded directly into a suitable mold,

i.e. directly further processed to a final product if all necessary components are already present.

Within the screw, the granular mixture obtained as described above is heated to a temperature which is generally within the range of 120°C to about 220°C and more preferably within the range of about 130°C to about 190°C. Preferably, such mixture is heated to a sufficiently high temperature and for a time long enough until the endothermic transition analysis (DSC) indicates that the specific relatively narrow peak just prior to the endotherm characteristic of oxidative and thermal degradation of starch has disappeared.

The minimum pressures under which the melts are formed correspond to the water vapour pressures produced at said temperatures. The process is carried out in a closed volume as explained above, i.e. in the range of the pressures which occur in extrusion or molding processes and known per se, e.g. from zero to 150 x $10^5$ $N/m^2$ preferably from zero to 75 x $10^5$ $N/m^2$ and most particularly from zero to 50 x $10^5$ $N/m^2$.

When forming a shaped article by extrusion the pressures are preferably as mentioned above. If the melt according to this invention is, e.g., injection molded, the normal range of injection pressures used in injection molding is applied, e.g. from 300 x $10^5$ $N/m^2$ to 3000 x $10^5$ $N/m^2$ and preferably from 700 x $10^5$ to 2200 x $10^5$ $N/m^2$.

Accordingly, the present invention provides a thermoplastic destructurized-starch substantially homogenous melt formed by the process comprising:

Accordingly the present invention provides a thermoplastic destructurized starch product formed by the process comprising:

1) providing a mixture consisting of:
   - a starch composed mainly of amylose and /or amylopectin and having a water content of from 5% to 40% by weight;
   - at least one polymer as defined herein above as component b);
   - a thermoplastic polymer as defined herein above as component c);
   - optionally one or more additives as defined herein above as component c) wherein the component b) is present in an amount of less than or equal to 50% and in an amount of at least 1% by weight of the total composition; and wherein the sum of the components b) and c) constitutes 15% up to 80% by weight of the total composition,

2) heating said mixture in the screw and barrel of an injection molding machine or an extruder at a temperature of 130°C to 220°C and at a pressure of up to 150 x $10^5$ $N/m^2$ to form a melt and heating the melt for a time long enough to obtain a destructurization of the starch and a homogenization of the melt;

3) shaping the melt into an article; and

4) allowing the shaped article to cool to a solidified dimensionally stable article.

The mixture provided in step 1) of either above-described processes may additionally contain component c) and additives as described herein.

Various hydrophilic polymer may be used as additives. These include water-soluble and water-swellable polymers.

As such it includes animal gelatin; vegetable gelatins; proteins such as sunflower protein, soybean proteins, cotton seed proteins, peanut proteins, rape seed proteins, acrylated proteins; water-soluble or water-swellable synthetic polymers such as polyacrylic acids and polyacrylic acid esters, polymethacrylic acids and polymethacrylic acid esters, polyvinylalcohols, polyvinylacetatephthalates (PVAP), polyvinylpyrrolidone, polycrotonic acids; polyitaconic acid, polymaleic acid; suitable are also phthalated gelatin, gelatin succinate, crosslinked gelatin, shellac, cationically modified acrylates and methacrylates possessing, for example, a tertiary or quaternary amino group, such as the diethylaminoethyl group, which may be quaternized if desired; and other similar polymers.

Preferred are synthetic polymers, most preferably polyacrylic acids, polyacrylic acid esters, polymethacrylic acids, polymethacrylic acid esters, polyvinylalcohols, polyvinylpyrrolidone.

Such hydrophilic polymers may optionally be added up to 50 % based on the starch/water component, preferably up to 30 % and most preferably between 5 % and 20 % based on the starch/water component. If any hydrophilic polymer is added, its mass should be considered along with the starch in determining the appropriate amount of water in the composition.

Other useful additives may be e.g. adjuvants, fillers, lubricants, mold release agents, plasticizers, foaming agents, stabilizers, coloring agents, pigments, extenders, chemical modifiers, flow accelerators, and mixtures thereof.

Examples for fillers are inorganic fillers, such as the oxides of magnesium, aluminum, silicon, titanium, etc. preferably in a concentration in the range of 0.02 to 50 % by weight preferably 0.20 to 20 % based on the total weight of all the components.

Examples for lubricants are stearates of aluminum, calcium, magnesium and tin as well as talc, silicones, which may be present in concentrations of 0.1 to 5 % preferably at 0.1 to 3 % based upon the weight of the

total composition.

Examples of plasticizers include low molecular poly(alkylene oxides), such as poly(ethylene glycols), poly(propylene glycols), poly(ethylene-propylene glycols); organic plasticizers of low molar masses, such as glycerol, pentaerythritol, glycerol monoacetate, diacetate or triacetate; propylene glycol, sorbitol, sodium diethylsulfosuccinate, added in concentrations ranging from 0.5 to 15 %, preferably ranging from 0.5 to 5 % based on the total weight of all the components. Examples of colouring agents include known azo dyes, organic or inorganic pigments, or colouring agents of natural origin. Inorganic pigments are preferred, such as the oxides of iron or titanium, these oxides, known per se, being added in concentrations ranging from 0.001 to 10 %, preferably 0.5 to 3 %, based on the weight of all the components.

There may further be added compounds to improve the flow properties of the starch material such as animal or vegetable fats, preferably in their hydrogenated form, especially those which are solid at room temperature. These fats have preferably a melting point of 50°C or higher. Preferred are triglycerides of $C_{12}$ -, $C_{14}$ -, $C_{16}$-, and $C_{18}$ - fatty acids.

These fats can be added alone without adding extenders or plasticizers.

These fats can advantageously be added alone or together with mono- and/or diglycerides or phosphatides, especially lecithin. The mono- and diglycerides are preferably derived from the types of fats described above, i.e. from $C_{12}$ -, $C_{14}$ -, $C_{16}$ -, and $C_{18}$ - fatty acids.

The total amount of fats, mono-, diglycerides and/or lecithins used are up to about 5 % and preferably within the range of about 0.5 to about 2 % by weight of the total weight of starch and any added hydrophilic polymer.

The materials may further contain stabilizers, such as antioxydants, e.g. thiobisphenols, alkylidenbisphenols secondary aromatic amines; light stabilizers such as UV-absorbers and UV-quenchers; hydroperoxide decomposer; free-radical scavengers; stabilizers against microorganisms.

The compositions of the invention form thermoplastic melts on heating and in a closed volume, i.e. under conditions of controlled water-content and pressure. Such melts can be processed just like conventional thermoplastic materials, using, for example, conventional apparatus for injection molding, blow molding, extrusion and coextrusion (rod, pipe and film extrusion), compression molding, foaming, to produce known articles. The articles include bottles, sheets, films, packaging materials, pipes, rods, laminated films, sacks, bags, pharmaceutical capsules, granules, powders or foams.

For example, these compositions may be used to prepare low density packaging materials (e.g. foams) by well-known methods. Conventional blowing agents may be utilized if desired or, for certain compositions, the water itself may act as the blowing agent. Open cell and closed cell foams may be produced as desired by varying the composition and processing conditions. These foams produced from the present compositions will demonstrate improved properties (e.g., dimensional stability, moisture resistance, etc.) when compared with foams made of starch without incorporation of the components b) and c) according to this invention.

These compositions may be used as carrier materials for active substances, and may be mixed with active ingredients such as pharmaceuticals and/or agriculturally active compounds such as insecticides or pesticides for subsequent release applications of these ingredients. The resulting extruded materials can be granulated or worked to fine powders.

The following examples are provided to further explain and exemplify the invention but not to limit the scope thereof, which scope is defined by the appended claims.

Example 1

(a) 5000 g of potato starch containing 15.10 % water are placed in a high speed mixer and 477.6 g of water are added under stirring. To the above mixture of starch and water, 425 g of hydroxypropyl cellulose (DS = 1.0; MS = 3.0), (component b)) sold as Klucel EF by Aqualon Company and 42 g of polyoxymethylene (POM) (component c)) sold as Hostaform 52021C by Hoechst; 42.5 g of hydrogenated fat (lubricant/release agent) sold as Boeson VP by Boehringer Ingelheim; 21.25 g of a melt flow accelerator (lecithin) sold as Metarin P by Lucas Meyer and 21.25 g of titanium dioxide (pigment and solid mixture flow accelerator) are added under stirring. The water content of the final mixture is 19.98 %.

(b) 5000 g of the mixture prepared under (a) are fed through a hopper into a Leistritz Single Screw Lab Extruder LSM 30 having a temperature profile of 55°C/ 145°C/ 165°C/ 165°C. The output of extrudate was 100 g/min.

The extrudate is cut into granulates and the water content is determined to be 13.10 %. The granulates are then brought back to a water content of 17 % by spraying of water under stirring in a conventional mixer.

(c) The granulates of the pre-blended mixture as obtained under (b) are fed through a hopper to an injection molding machine Kloeckner-Ferromatic FM 60, for the production of tensile test pieces. The temperature profile is 90°C/ 155°C/ 155°C/ 155°C, the shot weight 8.0 g, the residence time 450 sec., the injection

pressure 1600 bar, the back pressure 30 bar.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on an Instron tensile test apparatus, each test with 4 pieces.

The samples are measured at room temperature using an extension rate of 10 mm per minute. Results are presented in Table 1 and compared with those obtained with tensile test pieces obtained from the same starch processed in a similar way but in absence of components b) and c). It can be seen from the results that the break strain (elongation at break) is going from 15.82 % to 32.40 % and break energy from 194.30 $kJ/m^2$ to 410.25 $kJ/m^2$ showing a considerable increase in the toughness of the blend material over the unblended one.

Table 1

| | Break Strain % | Break Energy ($kJ/m^2$) |
|---|---|---|
| starch (unblended starch) | 15.82 | 194.3 |
| ternary blend Example 1 | 32.40 | 410.25 |

Also the values for the dimensional stability of the test pieces in humid air are much superior compared to those obtained for non-blended destructurized starch.

Of course different blend compositions show different values for the physical parameters indicated. To obtain the best values is a matter of optimization by varying the concentration of the different components, which is no problem to the expert in the art.

Example 1 is repeated with the following blends as per the Examples 2 to 6 whereby analogous results as given in Table 1 as well as good results for the dimensional stability were obtained.

## Example 2

Example 1 is repeated except that the ratio of the components is varied as given in Table 2. For comparison perspective, Example 1 is shown as Blend No. 1.

Table 2

| Blend No. | starch: component b)+c) (weight ratio) | component b): component c) (weight ratio) |
|---|---|---|
| 2 | 50 : 50 | 100 : 0 |
| 3 | 60 : 40 | 99 : 1 |
| 4 | 70 : 30 | 50 : 1 |
| 5 | 80 : 20 | 20 : 1 |
| Ex. 1 | 91.5 : 8.5 | 10 : 1 |
| 6 | 90 : 10 | 1 : 1 |
| 7 | 94 : 6 | 1 : 10 |
| 8 | 98 : 2 | 1 : 50 |
| 9 | 99 : 1 | 1 : 99 |

The resulting injection molded polymers are tougher and more resistant to humid air than the unmodified starch polymer. The toughness as judged by resistance to breaking upon bending increases from blend 9 to blend 2 in concert with the combined increase in hydroxy propyl cellulose content. While the resistance to softening in humid atmosphere is improved in all cases relative to unmodified starch, the resistance of blends 1,4,5 and 6 are particularly good. These results illustrate the unexpected combinations as benefits in performance.

## Example 3

Example 1 is repeated by replacing component b) with hydroxypropyl-methyl cellulose (DS = 1.0 for hydroxypropyl group, MS = 2.0; DS = 0.5 for the methyl group). Component (c) is replaced by ethylene-acrylic acid copolymer (80 % ethylene and 20 % acrylic acid).

The resulting injection molded polymer is tougher and more resistant to humid air than unmodified starch polymer.

## Example 4

Example 1 is repeated by replacing component (b) by methyl cellulose (DS = 0.5). Component c) is replaced by ethylene-vinyl alcohol copolymer (38 % ethylene, 62 % vinyl alcohol) sold as EVAL EP-F-101 by Kuraray. The resulting injection molded polymer blend is tougher and more resistant to humid air than unblended starch.

## Example 5

Example 1 is repeated by replacing component (b) by hydroxypropyl starch acetate (DS = 1.0 for acetate; DS = 0.5 for the hydroxypropyl group with MS = 3.0). Component (c) is replaced by ethylene-vinyl acetate copolymer (80 % ethylene, 20 % vinyl acetate) sold as Escorene UL 02020 by Exxon. The resulting injection molded polymer blend is tougher and more resistant to humid air than unblended starch.

Example 6

Example 1 is repeated by increasing component b) by hydroxyethyl starch (DS = 0.8; MS = 5). Component (c) is replaced by vinyl alcohol-vinyl acetate copolymer (87 % - 89 % vinyl alcohol; 11 % - 13 % vinyl acetate) sold as Airvol 540 S by Air Products.

The resulting injection molded polymer blend is tougher and more resistant to humid air than unmodified starch.

Example 7

(a) 9000 g of potato starch containing 15.1 % water are placed in a high speed mixer and 850 g of hydroxyethyl cellulose (DS = 1.5; MS = 2.5) (component b) sold as Natrosol by Aqualon Company. 76.5 g of hydrogenated fat (lubricant release agent sold as Boeson VP by Boehringer Ingelheim, 38.25 g of a melt flow accelerator (lecithin) sold as Metarin P by Lucas Meyer are added under stirring. The water content of the final mixture is 14.19 %.

(b) 10,000g of the mixture prepared under (a) are fed through a hopper into a Werner & Pfleiderer co-rotating twin screw extruder (model Continua 37).

The temperature profile of the four sections of the barrel is respectively 20°C/ 180°C/ 180°C/ 80°C.

Extrusion is carried out with a mixture output of 8 kg/hr (screw speed 200 rpm). Water was added at the inlet with a flow rate of 2.1 kgs/hr. The water content of the material during extrusion is therefore 32 %. In the last section of the extruder 300 mbar reduced pressure is applied to remove part of the water as water vapour.

The water content of the granulates is 17.4 % as measured after they have equilibrated at room temperature.

(c) The granulates of the pre-blended mixture as obtained under (b) ($H_2O$ content: 17.4 %) are fed through a hopper to an injection molding machine Arburg 329-210-750 for the production of tensile test pieces. The temperature profile of the barrel is: 90°C/ 165°C/ 165°C/ 165°C.

The shot weight is 8 g, the residence time 450 sec., the injection pressure 1616 bar, the back pressure 80 bar, the screw speed 180 rpm.

The tensile test pieces thus produced are conditioned in a climatic cabinet at 50 % R.H. for five days as an arbitrary standard condition.

The test pieces are of standard DIN design (DIN No. 53455).

(d) The conditioned tensile test pieces are then tested for their stress/strain behaviour on a Zwick tensile test apparatus.

The samples are measured at room temperature using an extension rate of 10 mm per minute. Results are presented in Table 3 and compared with those obtained with tensile test pieces obtained from the same starch processed in a similar way but in absence of components b) and c).

Table 3

| | unblended starch | Example Nos. 7 | 8 | 9 |
|---|---|---|---|---|
| break strain % | 22 | 32 | 31 | 486 |
| break energy $KJ/m^2$ | 325 | 435 | 421 | 1937 |

Example 8

(a) Example 7 is repeated using 255 g of hydroxyethyl cellulose (DS = 1.5; MS = 2.5) sold as Natrosol by Aqualon Company instead of 850 g and 170 g Nylon 12 sold as Grilamid L-20-GN by Ems-Chemie. The weight of the other materials of Section a) of Example 7 is the same. The water content of the final mixture is 14.1 %.

(b) The extrusion is carried out as in Section b) of Example 7 but the temperature profile of the barrel is respectively 20°C/ 80°C/ 220°C/130°C. The other processing characteristics are the following:

| | |
|---|---|
| mixture output: | 8.4 kg/hr |
| screw speed: | 200 rpm |
| water addition: | 4.1 kg/hr |
| reduced pressure: | 450 mbar |
| water content of granulates: | 16.35 % |

(c) The injection molding of the granulates after they have been remoistered to 17 % $H_2O$ is carried out with the same equipment as in Example 7. The processing conditions are the following:

| | |
|---|---|
| temperature profile: | 90°C/ 165°C/ 165°C/ 165°C |
| shot weight: | 8 g |
| residence time: | 450 sec. |
| injection pressure: | 1650 bar |
| back pressure: | 80 bar |
| screw speed: | 180 rpm |

The tensile test pieces obtained are conditioned at 50 % R.H. for 5 days and then their stress-strain behaviour on a Zwick tensile test apparatus is determined. Results are presented on Table 3.

Example 9

(a) 2100 g of potato starch containing 15.1 % water are placed in a high speed mixer and 765 g of hydroxypropyl cellulose (component b) sold as Klucel EF by Aqualon Company. 5950 g of thermoplastic polyurethane elastomer (component c)) sold as Pellethane 2103-80-AE by Dow Chemical Co.

17.85 g of hydrogenated fat (lubricant/release agent) Boeson VP and 8.9 g of a melt flow accelerator (lecithin/Metarin P) are added under stirring. The water content of the final mixture is 7.85 %.

(b) 8000 g of the mixture prepared under (a) were fed through a hopper into the same twin-screw co-rotating extruder described in Example 6. The extrusion of the mixture was carried out with the following temperature profile: 20°C/ 80°C/ 120°C/ 100°C. The other parameters of the extrusion experiment were the following:

| | |
|---|---|
| material output: | 8.8 kg/hr |
| screw speed: | 200 rpm |
| water added: | 1.8 kg/hr |
| reduced pressure (last section) | 800 mbar |
| water-content during extrusion: | 23.5 % |

The water content of the granulates was 2 % as measured after they had equilibrated at room temperature.

(c) The granulates obtained under (b) were processed using the same injection molding machine described in (c) of Example 6. The temperature profile of the barrel is 90°C/ 175°C/ 175°C/ 175°C. The other processing parameters were:

| | |
|---|---|
| shot weight: | 6.5 g |
| residence time: | 450 sec. |
| injection pressure; | 1830 bar |
| back pressure: | 80 bar |
| screw speed: | 180 rpm |

The tensile test pieces thus produced are conditioned at 50 % R.H. and tested on a Zwick tensile test apparatus as described in (d) of Example 7.

Results are presented in Table 3.

Example 10

(a) 4800 g of potato starch containing 15 % water are placed in a high speed mixer and 765 g of hydroxypropyl cellulose (component b) sold as Klucel EF by Aqualon Company; 3400 g of thermoplastic polyurethane

elastomer (component c)) sold as Pellethane 2103-80-AE by Dow Chemical Co; 255 g of polyethylene sold as Lupolen 2410 by BASF; 40.8 g of hydrogenated fat (lubricant/release agent) Boeson VP and 20.3 g of a melt flow accelerator (lecithin/Metarin P) are added under stirring. The water content of the final mixture is 7.8 %. The mixture is further processed as in Sections b) and c) of Example 7. The resulting injection molded polymer blend is tougher and more resistant to humid air than unblended starch.

Example 11

Example 7 (Section a) is repeated.

b) 5000 g of the mixture prepared under Section a) are fed through a hopper into a Werner-Pfleiderer co-rotating twin screw extruder (model Continua 37) and processing carried out in a similar way as the one described in Section b) of Example 7. Water added at the inlet is adjusted so that the water content of the material is 21 % by weight. The cutter is removed from the die face and a continuous extrudate is obtained which is foamed as a result of the excess water evaporation. The foam is chopped into 30-40 mm lengths and is useful as a loose-fill, packaging insulation material.

Example 12

During each of the injection molding operations in Examples 1 - 10 an experiment is performed to demonstrate the utility of making foams. The molten material which is obtained as described in Example 1 or 7, Sections a), b) and c) in each case is extruded into the open atmosphere (Section c) instead of being injection molded into a closed mold. In every case the material is converted into a foamed extrudate useful for loose-fill in packaging applications.

Example 13

The granulates from Example 1 are mixed with polystyrene in the proportion of 30 to 70 parts by weight and are treated according to Example 11 (Section b) The resulting foamed extrudate contains a very fine and uniform cell structure suitable for a variety of uses including structural foam.

## Claims

**1.** A composition consisting of

a) destructurized starch produced by heating a starch having a water content of 5 to 40% by weight based on the starch/water component, in a closed volume under shear; and at a temperature of 130°C to 220°C above the glass transition and the melting points of its components and at a pressure of up to 150 x $10^5$ N/m$^2$ to form a melt whereby the pressure corresponds at a minimum to the vapour pressure of water at the temperature used and heating the melt for a time long enough to obtain a melting of the molecular structure of the starch granules and a homogenization of the melt;

b) at least one alkoxylated cellulose, one alkoxylated starch or one alkoxylated hemi-cellulose, which contains hydroxyalkyl groups and which is optionally further substituted by alkyl ether groups and/or alkyl ester groups wherein the degree of substitution, (average number of hydroxyl groups per anhydroglucose unit that is substituted) is up to 3.0;

c) a thermoplastic polymer which undergoes melt formation at a set processing temperature within the range of 95°C to 190°C and is selected from (i) the group consisting of polyolefines, polystyrenes, polyacrylonitriles, polyacrylates, polymethacrylates, polyacetals, polyamides, thermoplastic polyesters, thermoplastic polyurethanes, polycarbonates, polyarylethers, thermoplastic polyimides, (ii) alkylene/vinyl ester-copolymers, alkylene/acrylate or methacrylate copolymers, ABS-copolymers, styrene/acrylonitrile-copolymers, alkylene/maleic anhydride-copolymers, acrylic acid esters/ acrylonitrile copolymers, acrylamide/acrylonitrile copolymers, and mixtures thereof.

d) optionally one or more materials selected from the group consisting of fillers, lubricants, mold release agents, plasticizers, foaming agents, stabilizers, flow accelerators, coloring agents, pigments and mixtures thereof;

wherein the component b) is present in an amount of less than or equal to 50% and in an amount of at least 1% by weight of the total composition; and wherein the sum of the components b) and c) constitutes 15% up to 80% by weight of the total composition.

2. The composition according to claim 1 wherein the degree of substitution is from 0.05 to 2.5.

3. The composition according to claim 1 wherein the degree of substitution is from 0.1 to 1.5.

4. The composition according to claim 3 wherein component b) is a starch as defined in claim 1.

5. A composition according to any one of the claims 1 to 4 wherein component b) contains hydroxy-ethyl and/or hydroxy-propyl groups.

6. A composition according to any one of the claims 1 to 5. The composition according to any one of the claims 1 to 4 wherein component c) is selected from (i) the group consisting of polyethylenes, polypropylenes, polyisobutylenes, polystyrenes, polyamides, thermoplastic polyesters, thermoplastic polyurethanes, polycarbonates, or (ii) the group consisting of ethylene/vinyl acetate copolymers, ethylene/vinylalcohol copolymers, ethylene/acrylic acid copolymers, ethylene methacrylate copolymers, styrene/acrylonitrile copolymers, ethylene/maleic anhydride copolymer and mixtures thereof.

7. The composition according to any one of the claims 1 to 6 wherein the component b) is present in an amount of 1% to 30% by weight of the entire composition.

8. The composition according to any one of the claims 1 to 6 wherein the sum of the components b) and c) constitute 50% or less by weight of the entire composition.

9. The composition according to any one of the claims 1 to 8 wherein the polymer of component c) absorbs water at a rate of less than 10% per 100 grams of the polymer at room temperature.

10. The composition according to any one of the claims 1 to 8 wherein the polymer of component c) absorbs water at a rate of less than 5% per 100 grams of the polymer at room temperature.

11. The composition according to any one of the claims 1 to 10 wherein the water content is from 5% to 30% by weight of the starch/water component.

12. The composition according to any one of the claims 1 to 10 wherein the water content is from 10% to 22% by weight of the starch/water component.

13. The composition according to any one of the claims 1 to 12 in the form of a melt.

14. The composition according to any one of the claims 1 to 12 in a solidified form.

15. The composition according to claim 14 in particulate, granulated or pelletized form.

16. The composition according to claim 14 in the form of a shaped article selected from the group consisting of containers, bottles, pipes, rods, packing materials, sheets, foams, films,sacks, bags and pharmaceutical capsules.

17. The composition according to claim 15 further melted and processed to form a shaped article selected from the group consisting of containers, bottles, pipes, rods, packing materials, sheets, foams, films, sacks, bags and pharmaceutical capsules.

18. The shaped articles according to claim 16 and claim 18 wherein the shaping process comprises foaming, filming, compression molding, injection molding, blow molding, extruding, co-extruding, vacuum forming, thermoforming and combinations thereof.

19. A thermoplastic destructurized starch product formed by the process comprising:
1) providing a mixture consisting of:
- a starch composed mainly of amylose and /or amylopectin and having a water content of from 5% to 40% by weight;
- at least one polymer as defined in claim 1 as component b);
- a thermoplastic polymer as defined in claim 1 as component c);
- optionally one or more additives as defined in claim 1 as component c)

wherein the component b) is present in an amount of less than or equal to 50% and in an amount of at least 1% by weight of the total composition; and wherein the sum of the components b) and c) constitutes 15% up to 80% by weight of the total composition,
2) heating said mixture in the screw and barrel of an injection molding machine or an extruder at a temperature of 130°C to 220°C and at a pressure of up to 150 x $10^5$ N/$m^2$ to form a melt and heating the melt for a time long enough to obtain a destructurization of the starch and a homogenization of the melt ;
3) shaping the melt into an article; and
4) allowing the shaped article to cool to a solidified dimensionally stable article.

**20.** The product according to claim 19 wherein the heating temperature in step 2) is from 130°C to 190°C.

**21.** The product according to claim 19 in particulate, granulated or pelletized form.

**22.** The product according to claim 19 in the form of a shaped article selected from the group consisting of containers, bottles, pipes, rods, packing materials, sheets, foams, films,sacks, bags and pharmaceutical capsules.

**23.** The product according to claim 21 further melted and processed to form a shaped article selected from the group consisting of containers, bottles, pipes, rods, packing materials, sheets, foams, films, sacks, bags and pharmaceutical capsules.

**Patentansprüche**

**1.** Eine Zusammensetzung bestehend aus:
a) destrukturierter Stärke hergestellt mittels Erwärmen einer Stärke mit einem Wassergehalt von 5 bis 40 Gewichts%, bezogen auf den Stärke/Wasser - Bestandteil, in einem geschlossenen Volumen unter Scherung; und bei einer Temperatur von 130°C bis 220°C oberhalb der Glasübergangsund der Schmelzpunkte ihrer Bestandteile und bei einem Druck von bis zu 150 x $10^5$ N/$m^2$, um eine Schmelze zu bilden, wobei der Druck mindestens dem Wasserdampfdruck bei den verwendeten Temperaturen entspricht und unter genügend langem Erwärmen der Schmelze, um eine Schmelzung der Molekularstruktur der Stärkegranulate und eine Homogenisierung der Schmelze zu erreichen;
b) mindestens eine alkoxylierte Cellulose, eine alkoxylierte Stärke oder eine alkoxylierte Hemicellulose, welche Hydroxyalkylgruppen enthält und welche gegebenenfalls weiter substituiert ist durch Alkyläthergruppen und/ oder Alkylestergruppen, wobei der Substitutionsgrad (durchschnittliche Anzahl von Hydroxylgruppen pro Anhydroglukose-Einheit, die substituiert wird) bis zu 3.0 beträgt;
c) ein thermoplastisches Polymer, welches eine Schmelzbildung bei einer eingestellten Verfahrenstemperatur im Bereich von 95°C bis 190°C aufweist, und ausgewählt ist von (i) der Gruppe umfassend Polyolefine, Polystyrole, Polyacrylnitrile, Polyacrylate, Polymethacrylate, Polyacetale, Polyamide, thermoplastische Polyester, thermoplastische Polyurethane, Polycarbonate, Polyaryläther, thermoplastische Polyimide, (ii) Alkylen/ Vinylester Copolymere, Alkylen/ Acrylat oder Methacrylat Copolymere, ABS - Copolymere, Styrol/ Acrylnitril Copolymere, Alkylen/ Maleinanhydrid Copolymere, Acrylsäureester/ Acrylnitril Copolymere, Acrylamid/ Acrylnitril Copolymere und deren Mischungen;
d) gegebenenfalls ein oder mehrere Stoffe ausgewählt von der Gruppe umfassend Füllstoffe, Gleitmittel, Formtrennmittel, Plastifizierungsmittel, Schäumungsmittel, Stabilisatoren, Fliessmittel, Farbstoffe, Pigmente und deren Mischungen;
wobei der Bestandteil b) in einer Menge von weniger als oder gleich 50 % und in einer Menge von mindestens 1 %, bezogen auf das Gesamtgewicht der Zusammensetzung, anwesend ist, und wobei die Summe der Bestandteile b) und c) 20 % bis 80 %, bezogen auf das Gesamtgewicht der Zusammensetzung, beträgt.

**2.** Die Zusammensetzung nach Anspruch 1, wobei der Substitutionsgrad zwischen 0.05 und 2.5 liegt.

**3.** Die Zusammensetzung nach Anspruch 1, wobei der Substitutionsgrad zwischen 0.1 und 1.5 liegt.

**4.** Die Zusammensetzung nach Anspruch 3, wobei der Bestandteil b) eine Stärke ist, wie definiert in Anspruch 1.

**5.** Eine Zusammensetzung nach einem der vorhergehenden Ansprüche 1 bis 4, wobei der Bestandteil b) Hydroxyäthyl- und/oder Hydroxypropylgruppen enthält.

6. Eine Zusammensetzung nach einem der vorhergehenden Ansprüche 1 bis 5, wobei der Bestandteil c) ausgewählt ist von (i) der Gruppe umfassend Polyäthylen, Polypropylen, Polyisobutylen, Polystyrole, Polyamide, thermoplastische Polyester, thermoplastische Polyurethane, Polycarbonate, oder (ii) der Gruppe umfassend Äthylen-Vinylacetat Copolymere, Äthylen/ Vinylalkohol Copolymere, Äthylen/ Acrylsäure Copolymere, Äthylen/ Methacrylat Copolymere, Styrol/ Acrylnitril Copolymere, Äthylen/ Maleinanhydrid Copolymere und deren Mischungen.

7. Die Zusammensetzung nach einem der vorhergehenden Ansprüche 1 bis 6, wobei der Bestandteil b) in einer Menge von 1 % bis 30 %, bezogen auf das Gesamtgewicht der Zusammensetzung, anwesend ist.

8. Die Zusammensetzung nach einem der vorhergehenden Ansprüche 1 bis 6, wobei die Summe der Bestandteile b) und c) 50 % oder weniger, bezogen auf das Gesamtgewicht der Zusammensetzung, beträgt.

9. Die Zusammensetzung nach einem der vorhergehenden Ansprüche 1 bis 8, wobei das Polymer des Bestandteils c) bei Zimmertemperatur Wasser in einer Menge von weniger als 10 % pro 100 Gramm Polymer absorbiert.

10. Die Zusammensetzung nach einem der vorhergehenden Ansprüche 1 bis 8, wobei das Polymer des Bestandteils c) bei Zimmertemperatur Wasser in einer Menge von weniger als 5 % pro 100 Gramm Polymer absorbiert.

11. Die Zusammensetzung nach einem der vorhergehenden Ansprüche 1 bis 10, wobei der Wassergehalt zwischen 5 % und 30%, bezogen auf das Gewicht des Stärke/Wasser - Bestandteils, liegt.

12. Die Zusammensetzung nach einem der vorhergehenden Ansprüche 1 bis 10, wobei der Wassergehalt zwischen 10 % und 22%, bezogen auf das Gewicht des Stärke/Wasser - Bestandteils, liegt.

13. Die Zusammensetzung nach einem der vorhergehenden Ansprüche 1 bis 12 in Form einer Schmelze.

14. Die Zusammensetzung nach einem der vorhergehenden Ansprüche 1 bis 12 in fester Form.

15. Die Zusammensetzung nach Anspruch 14 in körniger, granulierter oder tablettierter Form.

16. Die Zusammensetzung nach Anspruch 14 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

17. Die Zusammensetzung nach Anspruch 15 weiter geschmolzen und verarbeitet, um einen geformten Gegenstand zu bilden, ausgewählt von der Gruppe umfassend Behälter, Flaschen, Rohre, Stäbe, Verpackungsmaterialien, Folien, Schäume, Filme, Säcke, Beutel und pharmazeutische Kapseln.

18. Die geformten Gegenstände nach Anspruch 16 und Anspruch 18, wobei der Formungsvorgang Schäumen, Filmen, Pressformen, Spritzgiessen, Blasformen, Extrudieren, Coextrudieren, Vakuumformen, Thermoformen und deren Kombinationen umfasst.

19. Ein Produkt aus thermoplastischer destrukturierten Stärke geformt durch das Verfahren umfassend:
1) Vorlegen einer Mischung umfassend:
- eine Stärke, hauptsächlich bestehend aus Amylose und/ oder Amylopektin und eines Wassergehalts von 5 bis 40 Gewichts-%;
- mindestens ein Polymer, wie in Anspruch 1 als Bestandteil b) definiert;
- ein thermoplastisches Polymer, wie in Anspruch 1 als Bestandteil c) definiert;
- gegebenenfalls ein oder mehrere Zusatzstoffe, wie in Anspruch 1 als Bestandteil c) definiert;

wobei der Bestandteil b) in einer Menge von weniger als oder gleich 50 % und in einer Menge von mindestens 1 %, bezogen auf das Gesamtgewicht der Zusammensetzung, anwesend ist; und wobei die Summe der Bestandteile b) und c) 15 % bis 80 %, bezogen auf das Gesamtgewicht der Zusammensetzung, beträgt,

2) Erwärmen der besagten Mischung in der Schnecke und der Trommel einer Spritzgiessvorrichtung oder einer Extrudiervorrichtung bei einer Temperatur von 130°C bis 220°C und bei einem Druck von bis zu 150 x $10^5$ N/$m^2$, um eine Schmelze zu formen und unter genügend langem Erwärmen, um eine Destrukturierung der Stärke und eine Homogenisierung der Schmelze zu erreichen;

3) Formen der Schmelze zu einem Gegenstand; und
4) Abkühlen lassen des geformten Gegenstands zu einem erstarrten dimensionsstabilen Gegenstand.

20. Das Produkt nach Anspruch 19, wobei die Erwärmungstemperatur in Stufe 2) zwischen 130°C und 190°C liegt.

21. Das Produkt nach Anspruch 19 in körniger, granulierter oder tablettierter Form.

22. Das Produkt nach Anspruch 19 in Form eines geformten Gegenstands ausgewählt von der Gruppe umfassend Behälter, Flaschen, Rohre, Stäbe, Verpackungsmaterialien, Folien, Schäume, Filme, Säcke, Beutel und pharmazeutische Kapseln.

23. Das Produkt nach Anspruch 21 weiter geschmolzen und verarbeitet, um einen geformten Gegenstand zu formen, ausgewählt von der Gruppe umfassend Behälter, Flaschen, Rohre, Stäbe, Verpackungsmaterialien, Folien, Schäume, Filme, Säcke, Beutel und pharmazeutische Kapseln.

## Revendications

1. Une composition comprenant
a) de l'amidon déstructuré produit par le chauffage d'un amidon ayant une teneur en eau de 5 à 40% en poids, par rapport au constituant amidon/eau, dans un volume clos sous action de cisaillement; et à une température de 130°C à 220°C au-dessus des points de transition vitreuse et de fusion de ses constituants et à une pression allant jusqu'à 150 x $10^5$ N/$m^2$ pour former une masse fondue, laquelle pression correspond au minimum à la pression de vapeur de l'eau à la température employée et chauffage de la masse fondue pendant un temps assez long afin d'obtenir une fusion de la structure moléculaire des granules d'amidon et une homogénéisation de la masse fondue;
b) au moins un alkoxyde de cellulose, un alkoxyde d'amidon ou un alkoxyde de hémi-cellulose qui contient des groupes hydroxyalkyles et qui est optionnellement substitué ultérieurement par des groupes d'alkyle-éther et/ou des groupes d'ester d'alkyle dont le degré de substitution (nombre moyenne de groupes hydroxyles par unité d'anhydroglucose qui est substituée) va jusqu'à 3.0;
c) un polymère thermoplastique qui subit une formation d'une masse fondue à une température de procédé réglée comprise entre 95°C et 190°C, et choisi dans (i) le groupe comprenant polyoléfines, polystyrènes, polyacrylonitriles, polyacrylates, polyméthacrylates, polyacétales, polyamides, polyesters thermoplastiques, polyuréthannes thermoplastiques, polycarbonates, polyaryléthers, polyimides thermoplastiques, (ii) alkylène/ ester de vinyle copolymères, alkylène/ acrylate ou méthacrylate copolymères, ABS-copolymères, styrène/ acrylonitrile copolymères, alkylène/ anhydride maléïque copolymères, esters d'acide acrylique/ acrylonitrile copolymères, acrylamide/ acrylonitrile copolymères et leurs mélanges;
d) en option une ou plusieurs matières choisies dans le groupe comprenant des charges minérales (fillers), des lubrifiants, des agents de démoulage, des plastifiants, des agents moussants, des stabilisateurs, des accélérateurs de coulée, des colorants, des pigments et leurs mélanges;
caractérisée en ce que le constituant b) est présent dans une quantité inférieure ou égale à 50% et dans une quantité d'au moins 1%, par rapport au poids total de la composition; et en ce que la somme des constituants b) et c) constitue de 15% à 80%, par rapport au poids total de la composition.

2. La composition selon la revendication 1, caractérisé en ce que le degré de substitution est compris entre 0.05 et 2.5.

3. La composition selon la revendication 1, caractérisé en ce que le degré de substitution est compris entre 0.1 et 1.5.

4. La composition selon la revendication 3, caractérisée en ce que le constituant b) est un amidon comme défini dans la revendication 1.

5. La composition selon l'une quelconque des revendications 1 à 4, caractérisée en ce que le constituant b) contient des groupes hydroxy-éthyles et/ou hydroxy-propyles.

6. La composition selon l'une quelconque des revendications 1 à 5, caractérisée en ce que le constituant

c) est choisi dans (i) le groupe comprenant polyéthylènes, polypropylènes, polyisobutylènes, polystyrènes, polyamides, polyesters thermoplastiques, polyuréthannes thermoplastiques, polycarbonates, ou (ii) le groupe comprenant éthylène vinylacétate copolymères, éthylène/ vinylalcool copolymères, éthylène/ acide acrylique copolymères, éthylène/ méthacrylate copolymères, styrène/ acrylonitrile copolymères, éthylène/ anhydride maléïque copolymères et leurs mélanges.

**7.** La composition selon l'une quelconque des revendications 1 à 6, caractérisée en ce que le constituant b) est présent en une quantité de 1% à 30%, par rapport au poids total de la composition.

**8.** La composition selon l'une quelconque des revendications 1 à 6, caractérisée en ce que la somme des constituants b) et c) constitue 50% ou moins, par rapport au poids total de la composition.

**9.** La composition selon l'une quelconque des revendications 1 à 8, caractérisée en ce que le polymère du constituant c) absorbe de l'eau à un taux inférieur à 10% par 100 grammes de polymère à température ambiante.

**10.** La composition selon l'une quelconque des revendications 1 à 8, caractérisée en ce que le polymère du constituant c) absorbe de l'eau à un taux inférieur à 5% par 100 grammes de polymère à température ambiante.

**11.** La composition selon l'une quelconque des revendications 1 à 10, caractérisée en ce que la teneur en eau est de 5% à 30%, par rapport au poids du constituant amidon/eau.

**12.** La composition selon l'une quelconque des revendications 1 à 10, caractérisée en ce que la teneur en eau est de 10% à 22%, par rapport au poids du constituant amidon/eau.

**13.** La composition selon l'une quelconque des revendications 1 à 12 sous forme d'une masse fondue.

**14.** La composition selon l'une quelconque des revendications 1 à 12 sous forme solide.

**15.** La composition selon la revendication 14 sous forme de particules, de granules ou de pastilles.

**16.** La composition selon la revendication 14 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

**17.** La composition selon la revendication 15 fondue à nouveau et traitée pour former un article façonné choisi dans le groupe comprenant des récipients, des bouteilles, des tubes, des tiges, des emballages, des feuilles, des mousses, des films, des sacs, des sachets et des capsules pharmaceutiques.

**18.** Les articles façonnés selon la revendication 16 et la revendication 18 caractérisés en ce que le procédé de façonnage comprend moussage, extrusion de films, moulage par compression, moulage par injection, moulage par soufflage, extrusion, coextrusion, formage sous vide, thermoformage et leurs combinaisons.

**19.** Un produit d'amidon thermoplastique déstructuré formé par le procédé comprenant:
1) fourniture d'un mélange comprenant:
- un amidon, essentiellement formé d'amylose et/ou d'amylopectine et ayant une teneur en eau entre 5% et 40% en poids;
- au moins un polymère, comme défini dans la revendication 1, en tant que constituant b);
- un polymère thermoplastique, comme défini dans la revendication 1, en tant que constituant c);
- en option un ou plusieurs additifs, comme défini dans la revendication 1, en tant que constituant c);

caractérisé en ce que le constituant b) est présent dans une quantité inférieure ou égale à 50% et dans une quantité d'au moins 1%, par rapport au poids total de la composition; et caractérisé en ce que la somme des constituants b) et c) constitue de 15% à 80%, par rapport au poids total de la composition;
2) chauffage du dit mélange dans une vis et un fût d'un appareil de moulage par injection ou d'extrusion à une température comprise entre 130°C et 220°C et à une pression allant jusqu'à 150 x $10^5$ N/$m^2$ pour former une masse fondue et chauffage de la masse fondue pendant un temps assez long afin d'obtenir une déstructuration de l'amidon et une homogénéisation de la masse fondue;

3) façonnage de la masse fondue en un article; et
4) laisser l'article façonné refroidir en un article solide dimentionnellement stable.

**20.** Le produit selon la revendication 19 caractérisé en ce que la température de chauffage dans l'étape 2) est comprise entre 130°C et 190°C.

**21.** Le produit selon la revendication 19 sous forme de particules, de granules ou de pastilles.

**22.** Le produit selon la revendication 19 sous forme d'un article façonné choisi dans le groupe comprenant des récipients, des bouteilles, des tubes, des tiges, des emballages, des feuilles, des mousses, des films, des sacs, des sachets et des capsules pharmaceutiques.

**23.** Le produit selon la revendication 21 fondu à nouveau et traité pour former un article façonné choisi dans le groupe comprenant des récipients, des bouteilles, des tubes, des tiges, des emballages, des feuilles, des mousses, des films, des sacs, des sachets et des capsules pharmaceutiques.